(19)

Europäisches
Patentamt
European
Patent Office
Office européen
des brevets

(11)     **EP 2 469 311 A1**

(12)                 **EUROPEAN PATENT APPLICATION**

(43) Date of publication:
    **27.06.2012 Bulletin 2012/26**

(51) Int Cl.:
    **G02B 5/30** (2006.01)     **B29D 11/00** (2006.01)

(21) Application number: **11195159.6**

(22) Date of filing: **22.12.2011**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(30) Priority: **27.12.2010 US 978852**

(71) Applicants:
    • **Dow Global Technologies LLC**
      **Midland, MI 48674 (US)**
    • **SKC Haas Display Films Co., Ltd.**
      **Choongchungnamdo (KR)**

(72) Inventors:
    • **Greener, Jehuda**
      **Rochester, NY New York 14618 (US)**
    • **Dookey, Joseph**
      **Midland, MI Michigan 48642 (US)**
    • **MI, Xiang-Dong**
      **Northborough, MA Massachusetts 01532 (US)**

(74) Representative: **Buckley, Guy Julian**
    **Patent Outsourcing Limited**
    **1 King Street**
    **Bakewell**
    **Derbyshire DE45 1DZ (GB)**

(54)    **Method of manufacturing a diffusely-reflecting polarizer having a nearly isotropic continous phase**

(57)    The present invention provides a method for manufacturing a diffusely reflecting polarizer, comprising the steps of: coextruding first and second polymers through a chaotic mixer and a sheeting die to produce a cast sheet with a desired blend morphology and stretching said cast sheet to produce a composite film containing a first polymer having a birefringence of less than 0.02, with said first polymer being an amorphous material and a continuous phase, and a second polymer which forms a dispersed phase, and having an index of refraction that differs from said continuous phase by greater than about 0.05 along a first axis and by less than about 0.05 along a second axis orthogonal to said first axis, wherein said first and second polymers taken together along a first axis for one polarization state of electromagnetic radiation exhibit a diffuse reflectivity $R_{1d}$, a specular reflectivity $R_{1s}$, a total reflectivity $R_{1t}$, a diffuse transmittance $T_{1d}$, a specular transmittance $T_{1s}$, and a total transmittance $T_{1t}$, and along a second axis for another polarization state of electromagnetic radiation exhibit a diffuse reflectivity $R_{2d}$, a specular reflectivity $R_{2s}$, a total reflectivity $R_{2t}$, a diffuse transmittance $T_{2d}$, a specular transmittance $T_{2s}$, and a total transmittance $T_{2t}$, the said first and second axes being orthogonal, wherein the parameters of composition, chaotic mixing, stretch temperature and stretch ratio for the process and Tg, and refractive index of the first and second polymers are selected to satisfy the equations:

$$(1) \qquad R_{1d} \text{ is greater than } R_{1s}; \text{ and}$$

$$(2) \qquad T_{2t}/(1-0.5(R_{1t}+R_{2t})) > 1.35.$$

FIG. 1

## Description

### FIELD OF THE INVENTION

This invention relates to a diffusely-reflecting polarizer comprising a film having a first continuous phase and a second disperse phase, the continuous phase being amorphous and nearly optically isotropic, and a method of making such a diffusely-reflecting polarizer.

### BACKGROUND OF THE INVENTION

Reflective polarizing films transmit light of one polarization and reflect light of the orthogonal polarization. They are useful in an LCD to enhance light efficiency. A variety of films have been disclosed to achieve the function of the reflective polarizing films, among which diffusely reflecting polarizers are more attractive because they may not need a diffuser in an LCD, thus reducing the complexity of the LCD. U.S. Patent Nos. 5,783,120 and 5,825,543 teach a diffusely-reflective polarizing film comprising a film containing an immiscible blend having a first continuous phase (also referred herein as the major phase, i.e., comprising more than 50 weight % of the blend) and a second disperse phase (also referred herein as the minor phase, i.e., comprising less than 50 weight % of the blend), wherein the first phase has a birefringence of at least 0.05. The film is oriented, typically by stretching, in one or more directions. The size and shape of the disperse phase particles, the volume fraction of the disperse phase, the film thickness, and the amount of orientation are chosen to attain a desired degree of diffuse reflection and total transmission of electromagnetic radiation of a desired wavelength in the resulting film. Among 124 examples shown in Table 1 through Table 4, most of which include polyethylene naphthalate (PEN) as a major and birefringent phase, with polymethyl methacrylate (PMMA) (Example 1) or syndiotactic polystyrene (sPS) (other examples) as a minor phase, except example numbers 6, 8, 10, 42-49, wherein PEN is a minor phase and sPS is a major phase. In all of these 124 examples the major phase comprises a semicrystalline polymer.

Examples 6, 8, and 10 in Table 1 showed that overall transmittance and reflectivity were not satisfactory. A figure of merit (FOM) defined as $FOM = T_{perp} / (1 - 0.5 * (R_{perp} + R_{para}))$ was smaller than 1.27. Examples 42-49 in Table 2 did not have the transmittance and reflectivity data, and were not discussed at all.

| | (Table 1 of U.S. Patent Nos. 5,783,120 and 5,825,543) | | | | | |
|---|---|---|---|---|---|---|
| | Fraction sPS | Tperp | T_para | R_Perp | R_para | FOM |
| 6 | 0.75 | 80.2 | 58.4 | 19.4 | 40 | 1.14 |
| 8 | 0.75 | 76 | 41 | 23.8 | 55.6 | 1.26 |
| 10 | 0.75 | 76.8 | 48.9 | 22.4 | 49.6 | 1.20 |

Films filled with inorganic inclusions with different characteristics can provide optical transmission and reflective properties. However, optical films made from polymers filled with inorganic inclusions suffer from a variety of infirmities. Typically, adhesion between the inorganic particles and the polymer matrix is poor. Consequently, the optical properties of the film decline when stress or strain is applied across the matrix, both because the bond between the matrix and the inclusions is compromised, and because the rigid inorganic inclusions may be fractured. Furthermore, alignment of inorganic inclusions requires process steps and considerations that complicate manufacturing.

Other films polymer matrix comprise droplets of light modulating liquid crystals dispersed within. Stretching of the material reportedly results in a distortion of the liquid crystal droplet from a spherical to an ellipsoidal shape, with the long axis of the ellipsoid parallel to the direction of stretch. A. Aphonin, "Optical Properties of Stretched Polymer Dispersed Liquid Crystal Films: Angle-Dependent Polarized Light Scattering, Liquid Crystals, Vol. 19, No.4, 469-480 (1995), discusses the optical properties of stretched films consisting of liquid crystal droplets disposed within a polymer matrix. He reports that the elongation of the droplets into an ellipsoidal shape, with their long axes parallel to the stretch direction, imparts an oriented birefringence (refractive index difference among the dimensional axes of the droplet) to the droplets, resulting in a relative refractive index mismatch between the dispersed and continuous phases along certain film axes, and a relative index match along the other film axes. Such liquid crystal droplets are not small as compared to visible wavelengths in the film, and thus the optical properties of such films have a substantial diffuse component to their reflective and transmissive properties. Aphonin suggests the use of these materials as a polarizing diffuser for backlit twisted nematic LCDs. However, optical films employing liquid crystals as the disperse phase are substantially limited in the degree of refractive index mismatch between the matrix phase and the dispersed phase.

Furthermore, the birefringence of the liquid crystal component of such films is typically sensitive to temperature. Prior art discloses a composite laminate made from thermotropic liquid crystal polymer blends. The blend consists of two liquid crystal polymers which are immiscible with each other. The blends may be cast into a film consisting of a dispersed inclusion phase and a continuous phase. When the film is stretched, the dispersed phase forms a series of fibers whose axes are aligned in the direction of stretch. While the film is described as having improved mechanical properties, no mention is made of the optical properties of the film. However, due to their liquid crystal nature, films of this type would suffer from the infirmities of other liquid crystal materials discussed above.

Still other films have been made to exhibit desirable optical properties through the application of electric or magnetic fields. For example, prior art describes a liquid crystal device which consists of a layer of fibers permeated with liquid crystal material and disposed between two electrodes. A voltage across the electrodes produces an electric field which changes the birefringent properties of the liquid crystal material, resulting in various degrees of mismatch between the refractive indices of the fibers and the liquid crystal. However, the requirement of an electric or magnetic field is inconvenient and undesirable in many applications, particularly those where existing fields might produce interference.

Other optical films have been made by incorporating a dispersion of inclusions of a first polymer into a second polymer, and then stretching the resulting composite in one or two directions. For example, polymers are selected such that there is low adhesion between the dispersed phase and the surrounding matrix polymer, so that an elliptical void is formed around each inclusion when the film is stretched. Such voids have dimensions of the order of visible wavelengths. The refractive index mismatch between the void and the polymer in these "microvoided" films is typically quite large (about 0.5), causing substantial diffuse reflection. However, the optical properties of microvoided materials are difficult to control because of variations of the geometry of the interfaces, and it is not possible to produce a film axis for which refractive indices are relatively matched, as would be useful for polarization-sensitive optical properties. Furthermore, the voids in such material can be easily collapsed through exposure to heat and pressure.

Also, a polarization sensitive scattering element (PSSE) has been described wherein, the PSSE is a microstructural composite of material domains having differing birefringence and wherein the PSSE transmits the majority of the light polarized along one optical axis while randomly backscattering the majority of the light polarized along a second optical axis.

Optical films have also been made wherein a dispersed phase is deterministically arranged in an ordered pattern within a continuous matrix. There, a lamellar polymeric film is disclosed which is made of polymeric inclusions which are large compared with wavelength on two axes, disposed within a continuous matrix of another polymeric material. The refractive index of the dispersed phase differs significantly from that of the continuous phase along one or more of the laminate's axes, and is relatively well matched along another. Because of the ordering of the dispersed phase, films of this type exhibit strong iridescence (i.e., interference-based angle dependent coloring) for instances in which they are substantially reflective. As a result, such films have seen limited use for optical applications where optical diffusion is desirable.

Thus, there remains a need for an improved diffusely-reflecting polarizer comprising a film having a continuous phase and a disperse phase that avoids the limitations of the prior art. The improved reflecting polarizer should have a continuous phase (the major phase) that is a relatively inexpensive material and that is amorphous, rather than crystalline or semicrystalline, to minimize haze, so the refractive index mismatch between the two phases along the material's three dimensional axes can be conveniently and permanently manipulated to achieve desirable degrees of diffuse and specular reflection and transmission. The film is also desirably stable with respect to stress, strain, temperature differences, moisture, and electric and magnetic fields, and wherein the film has an insignificant level of iridescence. These and other needs are met by the present invention, as hereinafter disclosed.

## SUMMARY OF THE INVENTION

The present invention provides a method for manufacturing a diffusely reflecting polarizer, comprising the steps of: coextruding first and second polymers through a chaotic mixer and a sheeting die to produce a cast sheet with a desired blend morphology and stretching said cast sheet to produce a composite film containing a first polymer having a birefringence of less than 0.02, with said first polymer being an amorphous material and a continuous phase, and a second polymer which forms a dispersed phase, and having an index of refraction that differs from said continuous phase by greater than about 0.05 along a first axis and by less than about 0.05 along a second axis orthogonal to said first axis, wherein said first and second polymers taken together along a first axis for one polarization state of electromagnetic radiation exhibit a diffuse reflectivity $R_{1d}$, a specular reflectivity $R_{1s}$, a total reflectivity $R_{1t}$, a diffuse transmittance $T_{1d}$, a specular transmittance $T_{1s}$, and a total transmittance $T_{1t}$, and along a second axis for another polarization state of electromagnetic radiation exhibit a diffuse reflectivity $R_{2d}$, a specular reflectivity $R_{2s}$, a total reflectivity $R_{2t}$, a diffuse transmittance $T_{2d}$, a specular transmittance $T_{2s}$, and a total transmittance $T_{2t}$, the said first and second axes being orthogonal, wherein the parameters of composition, chaotic mixing, stretch temperature and stretch ratio for the process and Tg, and refractive index of the first and second polymers are selected to satisfy the equations:

$$(1) \quad R_{1d} \text{ is greater than } R_{1s}; \text{ and}$$

$$(2) \quad T_{2t}/(1-0.5(R_{1t}+R_{2t}))>1.35.$$

The present invention also provides a method for manufacturing a diffusely reflecting polarizer, comprising the steps of: coextruding first and second polymers through a chaotic mixer and a sheeting die to produce a cast sheet with a desired blend morphology and stretching said cast sheet to produce a composite film containing a first polymer having a birefringence of less than 0.01, with said first polymer being an amorphous material and a continuous phase, and a second polymer which forms a dispersed phase, and having an index of refraction that differs from said continuous phase by greater than about 0.05 along a first axis and by less than about 0.05 along a second axis orthogonal to said first axis, wherein said first and second polymers taken together along a first axis for one polarization state of electromagnetic radiation exhibit a diffuse reflectivity $R_{1d}$, a specular reflectivity $R_{1s}$, a total reflectivity $R_{1t}$, a diffuse transmittance $T_{1d}$, a specular transmittance $T_{1s}$, and a total transmittance $T_{1t}$, and along a second axis for another polarization state of electromagnetic radiation exhibit a diffuse reflectivity $R_{2d}$, a specular reflectivity $R_{2s}$, a total reflectivity $R_{2t}$, a diffuse transmittance $T_{2d}$, a specular transmittance $T_{2s}$, and a total transmittance $T_{2t}$, the said first and second axes being orthogonal, wherein the parameters of composition, chaotic mixing, stretch temperature and stretch ratio for the process and Tg, and refractive index of the first and second polymers are selected to satisfy the equations:

$$(1) \quad R_{1d} \text{ is greater than } R_{1s}; \text{ and}$$

$$(2) \quad T_{2t}/(1-0.5(R_{1t}+R_{2t}))>1.30.$$

## BRIEF DESCRIPTION OF THE DRAWINGS

FIG. 1 is a schematic perspective drawing illustrating a diffusely reflecting polarizer made in accordance with the present invention, in which the polarizer has a core layer that contains a disperse phase that is highly birefringent and a continuous phase that is nearly or completely optically isotropic and the core layer is disposed between two outer (protective) layers;
FIG. 2 is a schematic perspective drawing illustrating the diffusely reflecting polarizer shown in FIG. 1 with the two protective layers removed;
FIG. 3 is a schematic perspective drawing illustrating a diffusely reflecting polarizer with two protective layers formed of materials which are neither the continuous phase material nor the disperse phase material; and
FIG. 4 is a schematic representation of a platelet-like blend morphology created by a continuous flow chaotic mixer.

## DETAILED DESCRIPTION OF THE INVENTION

Definitions:

The terms "specular reflectivity", "specular reflection", or "specular reflectance" $R_s$ refer to the reflectance of light rays into an emergent cone with a vertex angle of 16 degrees centered around the specular angle. The terms "diffuse reflectivity", "diffuse reflection", or "diffuse reflectance" $R_d$ refer to the reflection of rays that are outside the specular cone defined above. The terms "total reflectivity", "total reflectance", or "total reflection" $R_t$ refer to the combined reflectance of all light from a surface. Thus, total reflection is the sum of specular and diffuse reflection.

Similarly, the terms "specular transmission" and "specular transmittance" $T_s$ are used herein in reference to the transmission of rays into an emergent cone with a vertex angle of 16 degrees centered around the specular direction. The terms "diffuse transmission" and "diffuse transmittance" $T_d$ are used herein in reference to the transmission of all rays that are outside the specular cone defined above. The terms "total transmission" or "total transmittance" $T_t$ refer to the combined transmission of all light through an optical body. Thus, total transmission is the sum of specular and diffuse transmission. In general, each diffusely reflecting polarizer is characterized by a diffuse reflectivity $R_{1d}$, a specular reflectivity $R_{1s}$, a total reflectivity $R_{1t}$, a diffuse transmittance $T_{1d}$, a specular transmittance $T_{1s}$, and a total transmittance $T_{1t}$, along a first axis for one polarization state of electromagnetic radiation, and a diffuse reflectivity $R_{2d}$, a specular

reflectivity $R_{2s}$, a total reflectivity $R_{2t}$, a diffuse transmittance $T_{2d}$, a specular transmittance $T_{2s}$, and a total transmittance $T_{2t}$ along a second axis for another polarization state of electromagnetic radiation. The first axis and second axis are perpendicular to each other and each is perpendicular to the thickness direction of the diffusely reflecting polarizer. Without the loss of generality, the first axis and the second axis are chosen such as the total reflectivity along the first axis is greater than that along the second axis (i.e., $R_{1t} > R_{2t}$) and the total transmittance along the first axis is less than that along the second axis (i.e., $T_{1t} < T_{2t}$).

Diffuse reflectivity, specular reflectivity, total reflectivity, diffuse transmittance, specular transmittance, total transmittance, as used herein, generally have the same meanings as defined in U.S. Patent Nos. 5,783,120 and 5,825,543.

Figure of Merit (FOM)

The diffusely reflecting polarizers made according to the present invention all satisfy

$$R_{1d} > R_{1s} \qquad\qquad \text{Equation (1)}$$

$$FOM \equiv T_{2t}/(1-0.5(R_{1t}+R_{2t})) > 1.35 \qquad\qquad \text{Equation (2)}$$

Equation (1) implies that the reflecting polarizers of the present invention are more diffusive than specular in reflection. It is noted that a wire grid polarizer (e.g., as available from Moxtek, Inc., Orem, Utah), a multilayer interference-based polarizer such as Vikuiti™ Dual Brightness Enhancement Film, manufactured by 3M, St. Paul, Minn, or a cholesteric liquid crystal based reflective polarizer are more specular than diffusive.

Equation (2) defines the figure of merit $FOM \equiv T_{2t}/(1-0.5(R_{1t}+R_2t))$ for the diffusively reflecting polarizer, and the equation states that the figure of merit FOM is greater than 1.35. For polarization recycling, what matters is the total reflection and total transmission, so only total reflection and total transmission are used to compute the FOM for the purpose of ranking different reflective polarizers. The figure of merit describes the total light throughput of a reflective polarizer and an absorptive polarizer such as a back polarizer used in an LCD, and is essentially the same as equation

(1) $T1 = \dfrac{T_p}{1 - 0.5\left(R_s + R_p\right)R}$ discussed in U. S. Patent Application Publication No. 2006/0061862, which applies to LCD systems where the light recycling is effected using a diffusive reflector or its equivalent. It is noted that R accounts for the reflectivity of the recycling reflective film, or the efficiency associated with each light recycling. In an ideal case, R is equal to 1, which means that there is no light loss in the light recycling. When R is less than 1, there is some light loss in the light recycling path. It is also noted that other forms of figure of merit can be used, however, the relative ranking of the reflective polarizers remain the same. For the purpose of quantifying and ranking the performance of a reflective polarizer, $FOM \equiv T_{2t}/(1-0.5(R_{1t}+R_{2t}))$ will be used in this application. The extinction ratio $T_{2t}/T_{1t}$ or $R_{1t}/R_{2t}$ may not be proper to describe a reflective polarizer because a reflective polarizer having a higher $T_{2t}/T_{1t}$ or $R_{1t}/R_{2t}$ may not necessarily perform better than one having a lower extinction ratio. For an ideal conventional absorptive polarizer, $T_{2t}=1$, $R_{1t}=R_{2t}=0$, so FOM=1. For an ideal reflective polarizer, $T_{2t}=1$, $R_{1t}=1$, and $R_{2t}=0$, so FOM=2. The diffusive reflecting polarizers, as disclosed in example numbers 6, 8, 10 of U.S. Patent Nos. 5,783,120 and 5,825,543, having sPS as the major phase had the *FOM* < 1.27, which were not satisfactory. As will be shown hereinbelow, the diffusively reflecting polarizers according to the present invention have the FOM greater than 1.35, more preferably greater than 1.5. Though some diffusive reflecting polarizers as disclosed in U.S. Patent Nos. 5,783,120 and 5,825,543 had the FOM greater than 1.35, they were composed of a continuous phase with a birefringence of greater than 0.05 and a disperse phase with smaller birefringence.

Amorphous and semi-crystalline polymers

A polymer that does not produce crystallization (exothermic) or melting (endothermic) peaks during a differential scanning calorimetry (DSC) test over a temperature ranging from below its glass transition temperature (Tg) to Tg + 250°C is said to be amorphous. Conversely, if such peaks are recorded in a DSC test the polymeric material is semi-crystalline. The DSC test is well known to those skilled in the art. In the present invention, a semi-crystalline polymer is not well suited for the continuous phase because of its propensity to thermally crystallize during stretching at elevated temperatures and thus produce an undesirable level of haze.

Immiscible and compatible polymer blends

Polymers that are thermodynamically incompatible when mixed together in the melt state are said to be immiscible. Such polymers will separate into distinct phases having coarse morphology and create an inhomogeneous blend, with each phase maintaining the distinct characteristics of the polymer components and poor adhesion between the phases. Compatible blends on the other hand exhibit fine phase morphology and good adhesion between the polymers comprising the blend.

Birefringence, weakly birefringent, and nearly optically isotropic

The quantity (nx-ny) is referred to as in-plane birefringence, $\Delta n_{in}$, where nx and ny are indices of refraction in the direction of x and y; x is taken as the direction of maximum index of refraction in the x-y plane and y direction is taken perpendicular to it; the x-y plane is parallel to the surface plane of the layer; and d is a thickness of the layer in the z-direction. The value of $\Delta n_{in}$ is typically given at a wavelength $\lambda$= 550 nm.

The quantity [nz-(nx+ny)/2] is referred to as out-of-plane birefringence, $\Delta n_{th}$, where nz is the index of refraction in the z-direction. If nz>(nx+ny)/2, $\Delta n_{th}$ is positive (positive birefringence), and if nz<(nx+ny)/2, $\Delta n_{th}$ is negative (negative birefringence). The value of $\Delta n_{th}$ is typically given at $\lambda$=550 nm.

As used herein, "nearly optically isotropic" or "weakly birefringent" means that after stretching, the material has a birefringence less than 0.02.

The current invention regarding a diffusely reflecting polarizer comprising a continuous phase and a disperse phase, the continuous phase being nearly isotropic, and a method of making such a diffusely reflecting polarizer is described hereinbelow and by referring to the drawings. The diffusely reflecting polarizers of the invention are effectively employed in a display device such as an LCD to enhance light efficiency.

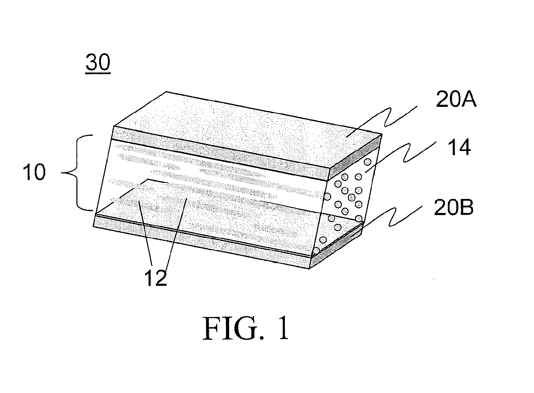

Referring now to Figure 1, the diffusely reflecting polarizer of the present invention 30 comprises a film 10 comprising an immiscible blend having a first polymeric phase 14 that is a continuous phase that is amorphous and has a birefringence of less than about 0.02 and a second polymeric phase 12 that is a disperse phase that is typically semicrystalline, the said disperse phase 12, whose index of refraction differs from said continuous phase 14 by greater than about 0.05 along a first axis and by less than about 0.05 along a second axis orthogonal to said first axis; wherein the diffuse reflectivity of said first and second phases taken together along at least one axis for at least one polarization state of electromagnetic radiation is at least about 50%. Optionally, the polarizer 30 may comprise additional layers (protective layers or "skin" layers 20A and 20B are illustrated in Figure 1 for example), these additional layers may be employed to facilitate stretching of the multilayer film or to improve one or more physical, chemical, or thermal properties of the reflective polarizer or to provide physical protection to the core layer.

The concentration of the continuous phase is at least 50% by weight while the concentration of the disperse phase is less than 50% by weight of the total material in the film10. Preferably the continuous phase is at least 60% by weight and the disperse phase is less than 40 weight %.

The first polymeric phase that is the continuous phase may comprise a single polymer or two or more miscible polymers. The second polymeric phase that is the disperse phase may also comprise a single polymer or two or more miscible polymers. Typically, each of the two phases comprises only a single polymer. However, a blend of two or more miscible polymers may be effectively employed in either phase in order to optimize or modify various properties such as melt viscosity, Tg, physical properties, thermal properties, refractive index, etc.

The one or more polymers comprising the continuous phase are amorphous, transmissive and weakly birefringent. The one or more polymers comprising the disperse phase are semi-crystalline, transmissive and highly birefringent. Small birefringence values are achieved by selecting polymers that have very low stress-optical coefficients and/or by stretching the film at a temperature ($T_s$) well above the glass transition temperature of the polymers comprising the continuous phase, $T_s > T_{g,1} + 30°C$ (where $T_{g,1}$ is the Tg of the continuous phase), such that the optical orientation is allowed to relax sufficiently to reduce the level of in-plane birefringence to below 0.02, preferably below 0.01, and more preferably below 0.005, as the material solidifies after stretching. Examples of polymers for use in the continuous phase include cyclo olefin polymers, acrylic polymers, styrenic polymers, copolyesters, and other amorphous polymers. Specific, non-limiting examples include cyclic olefin copolymers such as the family of Topas ® polymers (available from Topas Advanced Polymers GmbH) and Apel ® polymers (available from Mitsui Chemicals Inc.), PMMA and Poly(MMA-co-Styrene), and amorphous copolyesters such as PETG 6763, SA100, SA115, and PCTG 5445 (available from Eastman Chemical). Particularly preferred polymers are cyclic olefin copolymers containing one or more norbornene units such as those disclosed in general formulas I to V in U.S. Patent No. 5,833,878.

These cyclic olefin copolymers (COC), are remarkably glass-like organic material. COC materials have a luminous transmittance of 91% in the visible region. In addition to their high transmittance and high Abbé number (58), COC resins have very low haze and yellowness, ensuring minimal light loss by scattering or absorption. As amorphous polymers with low optical anisotropy, they also have inherently low birefringence and a very low stress-optic coefficient - as low or even lower than that of PMMA - so that they retain low birefringence under load. Grades of COC resins are available with heat deflection temperatures as high as 170°C (338°F) making them tolerant of short term exposures to quite high temperatures. COC resins provide excellent moisture control. It has roughly double the moisture barrier of high-density polyethylene (HDPE) and five times the moisture barrier of low-density polyethylene (LDPE). COC resins are environmentally-friendly and permit easy disposal. On combustion it forms no toxic gases but only water and carbon dioxide.

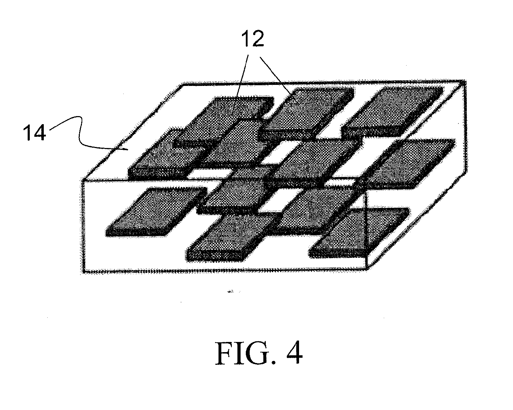

High values of birefringence in the dispersed phase are achieved by utilizing materials with relatively high stress-optical coefficient and by stretching the film at a temperature $T_s$ such that : $T_{g,2} < T_s < T_{g,2} + 30°C$ (where $T_{g,2}$ is the Tg of the disperse phase). Examples of polymers suitable for use in the disperse phase include polyesters, polyamides, and polyesteramides and other classes of semicrystalline polymers. Specific non-limiting examples include poly(ethylene terephthalate) (PET), poly(ethylene naphthalate) (PEN), and polyesters containing the cyclohexyl dimethylene moiety. In addition to the high birefringence, the overall levels of transmittance and reflectivity are greatly influenced by the domain morphology of the disperse phase. Generally, a platelet-like morphology, as shown in Figure 4, enhances the directional reflectance of the blend although other blend morphologies could also be beneficial. Controlling this morphology is, therefore, highly desirable for improving the performance of the diffusely-reflecting polarizer of the present invention.

In one embodiment of the invention, at least one of the continuous and dispersed phases comprises a compatible polyester blend and a means of substantially inhibiting a transesterification reaction. The polyester blend may comprise one or more polyesters or at least one polyester and a polycarbonate. Transesterification inhibitors are well known in the polymer processing industry and generally comprise a phosphorous compound. Suitable transesterification inhibitors for use in the present invention include organophosphites such as triphenyl phosphite, bis(2,4-di-t-butylphenyl)pentaerythritol diphosphite, di-n-octadecyl phosphite, tris(2,4-di-t-butylphenyl)phosphite, tris(mononylphenyl) phosphite, tri-methyl phosphite, triethyl phosphite, and others.

The diffusely reflecting polarizers of the invention may be used in combination with one or more other optical films that are typically employed in display devices such as LCDs, including, for example, films that provide the function of antireflection, ambient light suppression, illumination enhancement, light collimation, light directing, light diffusion, light spreading, viewing angle enhancement, polarization, and the like

The diffusely-reflecting polarizer of the present invention is produced by a multi-step process. First, the first polymer and the second polymer are coextruded by two or more extruders into a continuous flow chaotic mixing element and a sheeting die, with the chaotic mixing element being operated to create a cast sheet with desired blend morphology. The chaotic mixing method is known in the art as a way to produce multi-component blends with a wide variety of well-controlled blend morphologies. Studies by Zumbrunen et al. (e.g., Y. H. Liu and D. A. Zumbrunen, J. Mat. Sci., 34, 1921 (1999), O. Kwon and D. A. Zumbrunen, Polym. Eng. Sci., 43, 1443 (2003); See also, US Patent Nos. 6,770,340 and 6,902,805), focusing mostly on barrier applications, describe different morphologies that can be created in multi-phase polymer systems by adjusting the operational parameters of the chaotic mixer whereby the morphology of the multi-phase polymer system is controlled not only by the thermodynamics of the blend components but also by the dynamics of the chaotic mixing process. In the case of the diffusely reflecting polarizer of the present invention, a platelet-like morphology (as shown in Figure 4) is particularly desirable and can be created by controlling the operational parameters of the chaotic mixer and the rheology of the polymer components, although other blend morphologies created by the chaotic mixing process can also be beneficial.

In addition to improving the optical performance of the diffusely reflecting polarizer, the chaotic mixing method also expands the latitude of material options, allowing the use of material pairs with a wider range of rheologies and surface properties.

The cast sheet with the desired blend morphology must further undergo a stretching step in order to induce the desired birefringence in the disperse phase of the film. In all cases the sheet is first heated to a temperature $T_s$, such that: $T_{g,1} < T_s < T_{g,2} + 30°C$ and is then stretched uniaxially, along the machine direction or along the cross-machine direction, or both, to produce the desired level of in-plane birefringence in the dispersed phase. Thus, the stretching temperature must meet the following conditions:

$$T_{g,1} \ < \ T_s$$

$$T_{g,2} \ < \ T_s \ < \ T_{g,2} + 30°C$$

(where $T_{g,1}$ and $T_{g,2}$ are the $T_g$'s of the first (continuous) and second (disperse) phase, respectively)

If the continuous phase has a high stress-optical coefficient then $T_s - T_{g,1} > 30°C$, i.e., the temperature interval must be relatively large to achieve low birefringence in the continuous phase (that is, the birefringence of the continuous phase is less than 0.02 after stretching and solidification).

Typical extension or stretch ratios range from 3X to 7X although a wider range of stretch ratios may be considered. Stretching can be done using a number of methods well known to those skilled in the art. In some cases the edges of the stretched film can be restrained during the stretching step although unrestrained stretch is preferred. Compared to the approach of US Patent Nos. 5,783,120 and 5,825,543, the present invention provides a wide range of options and materials with the possibility of lower cost and superior optical performance without the limitations defined in the prior art.

After stretching, the total thickness of the reflecting polarizer of the invention is about 25 to 1000 microns in thickness. Typically, the total thickness is about 100 to 500 microns in thickness to achieve the desired degree of polarization recycling and dimensional stability.

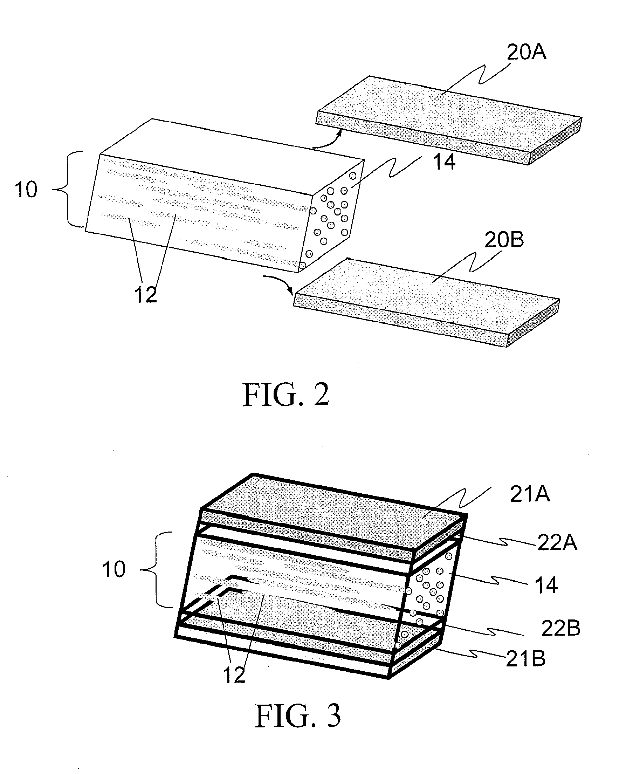

As mentioned previously, in one embodiment of the invention the reflective polarizer 30 is produced with protective layers 20A and 20B on each side of film10, see Fig. 1. The protective layers are co-extruded and co-stretched with the film 10 and comprise a material similar to and possibly identical to the composition of the disperse phase. The stretched sheet is finally cooled down and wound on a roll. The protective layers 20A and 20B can remain permanently attached to the film 10 or peeled off at some time before the reflective polarizer is assembled in the LC display. The peeling of the protective layers is illustrated in Figure 2 and requires that they are held by weak adhesion forces to film 10. This level of adhesion can be controlled by the addition of suitable compatibilizing agents, polymeric surfactants, plasticizers and various other addenda. Alternatively the adhesion between the protective layers and the film 10 can be enhanced by addition of tie layers as shown in Figure 4 wherein layers 22A and 22B represent tie layers disposed between film 10 and corresponding protective layers 21A and 21B. Suitable materials for use in the tie layers should have some compatibility or affinity for the continuous polymeric phases employed in the film 10 and the protective layers 21A and 21B. For one embodiment in which the continuous phase comprises a cyclic olefin copolymer and the protective layers comprise a polyester, suitable tie layer materials include ethylene-vinyl acetate polymers and ethylene-acrylate polymers.

EXAMPLES

A diffusely reflecting polarizer was made in accordance with the invention by extruding a blend of a first polymeric phase and a second polymeric phase. The dry component mixture was fed at a desired composition into a single screw extruder. The blend was coextruded through a multi-manifold die with a protective layer on either side of the immiscible blend film comprising the phases. After exiting the die the cast sheet passed through a three roll stack comprising a pair of calender rolls to improve its surface quality. After casting, the total sheet thickness was about 800 microns, and the protective layers had a combined thickness of approximately 1/4 of the total sheet thickness. The three-layered cast sheet was then stretched along the machine direction to induce birefringence in the birefringent disperse phase.

The sheet was first heated to the nominal stretching temperature $T_s$ and then stretched along the machine direction in the uniaxial unconstrained mode by a factor of 3X to 5X. In the case where the disperse phase was PET, the stretching temperature was varied at 90 °C, 95 °C, 98 °C, 101 °C, 104 °C, and 107 °C. In the case where the disperse phase was PEN, the stretching temperature was varied at 125 °C, 128 °C, 132 °C, 135 °C, 139 °C and 148 °C. The stretching temperatures were chosen to satisfy:

$$T_{g,2} + 30°C > T_s > T_{g,2}$$

$$T_s > T_{g,1}$$

The stretched sheet was cooled down and the protective layers were peeled off to yield the final diffusely reflecting polarizer film. The oriented samples were then cut and tested using a Perkin Elmer 650 UV-VIS spectrometer. The total transmittance and reflectance (reflectivity) of the stretched film samples was measured and expressed at 550 nm and a figure of merit (FOM) was computed based on Equation 3. Diffuse reflectivity was measured using an integrating sphere to capture all the reflected light excluding light rays falling into an emergent cone with a vertex angle of 16 degrees centered around the specular angle. Specular reflectivity was determined by subtracting the measured diffuse reflectivity from the measured total reflectivity.

A list of all the materials, compositions, stretching conditions and corresponding FOM values for the stretched film samples is given in following Tables.

Table 1: List of Materials

| Material ID | Generic | Source | $T_g$ (°C) | Ref. Index (@ 550 nm) |
|---|---|---|---|---|
| Eastar 7352 | PET | Eastman Chemical | 76 | 1.54 |
| PEN | PEN | Eastman Kodak | 120 | 1.57 |
| Topas 8007 | coc | Topas Advanced Materials | 77 | 1.53 |
| PETG 6763 | Polyester | Eastman Chemical | 81 | 1.54 |
| PCTG 5445 | Polyester | Eastman Chemical | | |
| SB | Styrene-co-butadiene | | 70 | 1.57 |
| Zylar 631 | MMA-co-styrene | Nova Chemicals | 95 | 1.56 |

Birefringence of the continuous phase and the disperse phase

Example 1: Pure continuous phase polymers Topas 8007, SB, Zylar 631, PETG 6763, and PCTG 5445 were coextruded with protective layers PET or PEN, and were stretched under the same conditions as the blends comprising the continuous and the disperse phases, i.e., at the same stretching temperature and the same stretching ratio. The skin layers were then peeled off. The refractive indices $n_{para}$, $n_{perp}$, and $n_z$ of each core layer consisting of pure amorphous polymer were then measured using the Metricon Prism Coupler 2010 from Metricon Corporation determined at the wavelength of 633 nm. The refractive indices $n_{para}$, $n_{perp}$, and $n_z$ correspond to the directions parallel to the stretching direction, perpendicular to the stretching direction, and along the sheet thickness direction, respectively. All the three indices $n_{perp}$, and $n_z$ are very close to each other, with the difference between any two of them is less than 0.02, and the difference in most cases was smaller than 0.005. The refractive indices $n_{para}$, $n_{perp}$, and $n_z$ of the skin layer which is either PET or PEN were also measured using the Metricon Prism Coupler 2010 from Metricon Corporation determined at the wavelength of 633 nm. The difference between $n_{para}$, $n_{perp}$ is greater than 0.05. This set of measurements confirmed that the continuous phase (major phase) is nearly isotropic, while the disperse phase (minor phase) is highly birefringent. This conclusion was also confirmed with birefringence measurement using M-2000V Spectroscopic Ellipsometer from the J. A. Woollam Co. (Lincoln, Nebraska).
Example 2: 70% wt. Zylar 631 as the continuous phase polymer, 30% wt. PEN as the dispersed polymer, protective layer PEN, stretched 5x in the extruded film direction at a temperature of 125 °C. This sample had an FOM value of 1.66 and had a total reflectivity of 83%, a diffuse reflectivity of 71% and a specular reflectivity of 12% (all measured at 550nm).
Example 3: 60% wt. PETG 6763 as the continuous phase polymer and 40% wt. PEN as the dispersed polymer, stretched 5x in the direction perpendicular to the extruded film direction at a temperature of 132 °C. This sample had an FOM value of 1.43 and had a total reflectivity of 73%, a diffuse reflectivity of 62% and a specular reflectivity of 11% (all measured at 550nm).
Example 4: 60% wt. PETG 6763 as the continuous phase polymer, 40% wt. PEN as the dispersed polymer, and 0.032 parts per hundred phosphoric acid added as a stabilizer (transesterification inhibitor), stretched 5x in the direction perpendicular to the extruded film direction at a temperature of 129 °C. This sample had an FOM value of 1.37 and had a total reflectivity of 76%, a diffuse reflectivity of 61% and a specular reflectivity of 15% (all measured at 550nm).
Examples 2-4 demonstrate that reflective polarizers of the invention provide reflectivity that is predominantly diffuse in nature and satisfy the conditions that the diffuse reflectivity is greater than 50% and FOM is greater than 1.35.

Impact of disperse polymer weight percent

Continuous phase polymer Topas 8007, disperse polymer Eastar 7352, protective layer Eastar 7352, stretching ratio 4x at temperature 95° C for 3 minutes soak time.

Table 1-1

| Example No. | PET Weight Percent | FOM |
|---|---|---|
| 5 | 5 | 1.12 |
| 6 | 10 | 1.12 |
| 7 | 15 | 1.21 |

(continued)

| Example No. | PET Weight Percent | FOM |
|---|---|---|
| 8 | 30 | 1.43 |
| 9 | 50 | 1.42 |

Continuous phase polymer Topas 8007, disperse polymer PET (Eastar 7352), protective layer PET, stretching ratio 5x at temperature 98° C for 3 minutes soak time.

Table 1-2

| Example No. | PET Weight Percent | FOM |
|---|---|---|
| 10 | 5 | 1.18 |
| 11 | 10 | 1.25 |
| 12 | 15 | 1.30 |
| 13 | 20 | 1.38 |
| 14 | 30 | 1.45 |
| 15 | 50 | 1.46 |

Continuous phase polymer SB, disperse polymer PEN, protective layer PEN, stretching ratio 4x at temperature 132° C for 3 minutes soak time.

Table 1-3

| Example No. | PEN Weight Percent | FOM |
|---|---|---|
| 16 | 20 | 1.40 |
| 17 | 40 | 1.47 |

Continuous phase polymer Zylar, disperse polymer PEN, protective layer PEN, stretching ratio 4x at temperature 128°C for 3 minutes soak time.

Table 1-4

| Example No. | PEN Weight Percent | FOM |
|---|---|---|
| 18 | 5 | 1.32 |
| 19 | 10 | 1.40 |
| 20 | 15 | 1.45 |
| 21 | 20 | 1.53 |

Tables 1-1 through 1-4 show that when other conditions were fixed, a suitable disperse polymer weight percent can be selected to enable the diffusely reflecting polarizer to have FOM greater than 1.30. The suitable disperse polymer weight percent range was between 45% and 5%.

Impact of stretching ratio

70% wt. continuous phase polymer Topas 8007, 30% wt. disperse polymer PET, protective layer PET, stretched at temperature 95° C for 3 minutes soak time.

Table 2-1

| Example No. | Stretch ratio | FOM |
|---|---|---|
| 22 | 3 | 1.28 |

(continued)

| Example No. | Stretch ratio | FOM |
|---|---|---|
| 23 | 4 | 1.43 |
| 24 | 5 | 1.44 |

70% wt. continuous phase polymer Topas 8007, 30% wt. disperse polymer Eastar 7352, protective layer Eastar 7352, stretched at temperature 101° C for 3 minutes soak time.

Table 2-2

| Example No. | Stretch ratio | FOM |
|---|---|---|
| 25 | 3 | 1.28 |
| 26 | 4 | 1.34 |
| 27 | 5 | 1.41 |

Tables 2-1 and 2-2 show that when other conditions were fixed, a suitable stretching ratio can be selected to enable the diffusely reflecting polarizer to have FOM greater than 1.30. The suitable stretching ratio was at least 3x, and the desired stretching ratio was 5x or more.

Impact of stretching temperature

70% wt. continuous phase polymer Topas 8007, 30% wt. disperse polymer PET, protective layer PET, stretched by 4x, for 3 minutes soak time.

Table 3-1

| Example No. | Temperature | FOM |
|---|---|---|
| 28 | 95 | 1.43 |
| 29 | 98 | 1.36 |
| 30 | 101 | 1.46 |

60% wt. continuous phase polymer S/B, 40% wt. disperse polymer PEN, protective layer PEN, stretched by 4x, for 3 minutes soak time.

Table 3-2

| Example No. | Temperature | FOM |
|---|---|---|
| 31 | 128 | 1.37 |
| 32 | 132 | 1.47 |
| 33 | 148 | 1.31 |

Tables 3-1 and 3-2 show that when other conditions were fixed, a suitable stretching temperature can be selected to enable the diffusely reflecting polarizer to have FOM greater than 1.30.

Impact of Continuous phase polymer and its concentration

Examples 34-37: 80% wt. continuous phase polymer, 20% wt. disperse polymer PEN, protective layer PEN, stretched by 4x at temperature of 125°C, for 3 minutes soak time. Example 37: 70% wt. continuous phase polymer, 30% wt. disperse polymer, protective layer PEN, stretched by 4.5x at temperature of 128°C, for 3 minutes soak time.

Table 4-1

| No. | Continuous phase Polymer | FOM |
|---|---|---|
| 34 | PCTG 5445 | 1.34 |
| 35 | Zylar 631 | 1.53 |
| 36 | PETG 6763 | 1.12 |
| 37 | PETG 6763 | 1.64 |

Table 4-1 shows that when other conditions were fixed, the choice of continuous phase polymer has an impact on the FOM of the diffusely reflecting polarizer.

Diffusely transmitting, reflective polarizer

Example 38: 70% wt. Zylar 631 as the continuous phase polymer, 30% wt. PEN as the dispersed polymer, protective layer PEN, stretched 5x at a temperature of 125 °C (using a 3 minute soak time prior to stretching). This sample had an FOM value of 1.66 and had a diffuse transmittance of 64% and a specular transmittance of 16% (all measured at 550nm)). Therefore, for this sample the diffuse transmittance comprised 80% of the total transmittance and the specular transmittance comprised only 20% of the total transmittance.

Impact of skin layer

For all the samples No.5-15 and 22-30, measurements were made both with the PET skin layer attached and with the PET skin layer removed. The samples without the skin layer had a rough surface. It was found that samples without the skin layer (rough surface) had a diffuse transmittance of around 45% while the same sample with the skin layer attached had a diffuse transmittance of around 10%. The samples without the skin layer had a small reduction in FOM compared to the same sample with the skin layer. In addition to removal of a skin layer, other methods to obtain a rough, diffusive surface include embossing or otherwise surface-patterning a permanent skin layer or a layer comprising scattering particles may be applied onto the reflective polarizer surface by coating or lamination methods.

**Claims**

1. A method for manufacturing a diffusely reflecting polarizer, comprising the steps of: coextruding first and second polymers through a chaotic mixer and a sheeting die to produce a cast sheet with a desired blend morphology and stretching said cast sheet to produce a composite film containing a first polymer having a birefringence of less than 0.02, with said first polymer being an amorphous material and a continuous phase, and a second polymer which forms a dispersed phase, and having an index of refraction that differs from said continuous phase by greater than about 0.05 along a first axis and by less than about 0.05 along a second axis orthogonal to said first axis, wherein said first and second polymers taken together along a first axis for one polarization state of electromagnetic radiation exhibit a diffuse reflectivity $R_{1d}$, a specular reflectivity $R_{1s}$, a total reflectivity $R_{1t}$, a diffuse transmittance $T_{1d}$, a specular transmittance $T_{1s}$, and a total transmittance $T_{1t}$, and along a second axis for another polarization state of electromagnetic radiation exhibit a diffuse reflectivity $R_{2d}$, a specular reflectivity $R_{2s}$, a total reflectivity $R_{2t}$, a diffuse transmittance $T_{2d}$, a specular transmittance $T_{2s}$, and a total transmittance $T_{2t}$, the said first and second axes being orthogonal, wherein the parameters of composition, chaotic mixing, stretch temperature and stretch ratio for the process and Tg, and refractive index of the first and second polymers are selected to satisfy the equations:

$$(1) \qquad R_{1d} \text{ is greater than } R_{1s}; \text{ and}$$

$$(2) \qquad T_{2t}/(1-0.5(R_{1t}+R_{2t}))>1.35.$$

2. . The method of claim 1 wherein the chaotic mixing parameters are selected to produce a platelet-like blend morphology

3. The method of claim 1 wherein the stretch temperature, $T_s$, satisfies the conditions:

$$(1) \quad T_{g,1} \ < \ T_s$$

$$(2) \quad T_{g,2} \ < \ T_s \ < \ T_{g,2} + 30°C$$

wherein $T_{g,1}$ is the glass transition temperature of the first polymer and $T_{g,2}$ is the glass transition temperature of the second polymer.

4. The method of claim 1 wherein the film is stretched uniaxially or biaxially to a total thickness of between 25 to 1000 microns.

5. The method of claim 1, wherein the first polymer comprises an olefinic polymer, cyclic olefin polymer, norbornene-containing polymer, compatible polyester blend of two or more polymers and a means of substantially inhibiting a transesterification reaction

6. The method of claim 1, wherein the second polymer comprises a polyester, PET or PEN, a miscible polyester blend of two or more polymers and a transesterification inhibitor.

7. The method of claim 1, wherein the weight ratio of the second polymer ranges from 5% to 45% of the layer.

8. The method of claim 1, wherein the second polymer is semicrystalline.

9. The method of claim 1, wherein protective layers are disposed on both sides of the reflective polarizer film by co-extrusion.

10. A method for manufacturing a diffusely reflecting polarizer, comprising the steps of: coextruding first and second polymers through a chaotic mixer and a sheeting die to produce a cast sheet with a desired blend morphology and stretching said cast sheet to produce a composite film containing a first polymer having a birefringence of less than 0.01, with said first polymer being an amorphous material and a continuous phase, and a second polymer which forms a dispersed phase, and having an index of refraction that differs from said continuous phase by greater than about 0.05 along a first axis and by less than about 0.05 along a second axis orthogonal to said first axis, wherein said first and second polymers taken together along a first axis for one polarization state of electromagnetic radiation exhibit a diffuse reflectivity $R_{1d}$, a specular reflectivity $R_{1s}$, a total reflectivity $R_{1t}$, a diffuse transmittance $T_{1d}$, a specular transmittance $T_{1s}$, and a total transmittance $T_{1t}$, and along a second axis for another polarization state of electromagnetic radiation exhibit a diffuse reflectivity $R_{2d}$, a specular reflectivity $R_{2s}$, a total reflectivity $R_{2t}$, a diffuse transmittance $T_{2d}$, a specular transmittance $T_{2s}$, and a total transmittance $T_{2t}$, the said first and second axes being orthogonal, wherein the parameters of composition, chaotic mixing, stretch temperature and stretch ratio for the process and Tg, and refractive index of the first and second polymers are selected to satisfy the equations:

$$(1) \quad R_{1d} \text{ is greater than } R_{1s}; \text{ and}$$

$$(2) \quad T_{2t}/(1-0.5(R_{1t}+R_{2t})) > 1.30.$$

11. The method of claim 10 wherein $T_{2d}, > T_{2s}$.

12. The method of claim 10 wherein the chaotic mixing parameters are selected to produce a platelet-like blend morphology

13. The method of claim 10 wherein the stretch temperature, $T_s$, satisfies the conditions:

$$(1) \quad T_{g,1} \ < \ T_s$$

$$(2) \quad T_{g,2} \; < \; T_s \; < \; T_{g,2} + 30^{\circ}C$$

wherein $T_{g,1}$ is the glass transition temperature of the first polymer and $T_{g,2}$ is the glass transition temperature of the second polymer.

**14.** The method of claim 10 wherein the film is stretched uniaxially or biaxially to a total thickness of between 25 to 1000 microns.

FIG. 1

**FIG. 2**

**FIG. 3**

FIG. 4

| | Europäisches Patentamt European Patent Office Office européen des brevets | **EUROPEAN SEARCH REPORT** | Application Number EP 11 19 5159 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/279740 A1 (MI XIANG-DONG [US] ET AL) 6 December 2007 (2007-12-06)<br>* abstract *<br>* claim 1; examples *<br>* figures * | 1-14 | INV.<br>G02B5/30<br>B29D11/00 |
| Y | KWON O ET AL: "PROGRESSIVE MORPHOLOGY DEVELOPMENT TO PRODUCE MULTILAYER FILMS AND INTERPENETRATING BLENDS BY CHAOTIC MIXING",<br>JOURNAL OF APPLIED POLYMER SCIENCE, JOHN WILEY & SONS, INC, US,<br>vol. 82, no. 7,<br>14 November 2001 (2001-11-14), pages 1569-1579, XP001096792,<br>ISSN: 0021-8995, DOI: 10.1002/APP.1995<br>* the whole document * | 1-14 | |
| A,D | ZUMBRUNNEN D A ET AL: "Morphology development in polymer blends produced by chaotic mixing at various compositions",<br>POLYMER, ELSEVIER SCIENCE PUBLISHERS B.V, GB,<br>vol. 43, no. 11, 1 May 2002 (2002-05-01), pages 3267-3277, XP004346908,<br>ISSN: 0032-3861, DOI: 10.1016/S0032-3861(02)00139-8<br>* the whole document * | 1-14 | TECHNICAL FIELDS SEARCHED (IPC)<br><br>G02B<br>B29D<br>B29K<br>B29C<br>B29B |
| A | US 2008/262125 A1 (ZUMBRUNNEN DAVID A [US]) 23 October 2008 (2008-10-23)<br>* abstract *<br>* figure 1 * | 1-14 | |
| A,D | US 6 902 805 B2 (ZUMBRUNNEN DAVID A [US] ET AL) 7 June 2005 (2005-06-07)<br>* abstract; figures * | 1-14 | |

-/--

The present search report has been drawn up for all claims

| Place of search | Date of completion of the search | Examiner |
|---|---|---|
| Munich | 12 April 2012 | Ward, Seamus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 11 19 5159

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 6 770 340 B2 (ZUMBRUNNEN DAVID A [US] ET AL) 3 August 2004 (2004-08-03) * abstract; figures * ----- | 1-14 | |
| A,D | US 5 783 120 A (OUDERKIRK ANDREW J [US] ET AL) 21 July 1998 (1998-07-21) * abstract; figures * ----- | 1-14 | |
| A,D | US 5 825 543 A (OUDERKIRK ANDREW J [US] ET AL) 20 October 1998 (1998-10-20) * abstract; figures * ----- | 1-14 | |

TECHNICAL FIELDS
SEARCHED      (IPC)

The present search report has been drawn up for all claims

| Place of search | Date of completion of the search | Examiner |
|---|---|---|
| Munich | 12 April 2012 | Ward, Seamus |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                       

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.                    EP 11 19 5159

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2012

| Patent document cited in search report | | Publication date | Patent family member(s) | | Publication date |
|---|---|---|---|---|---|
| US 2007279740 | A1 | 06-12-2007 | CN | 101535848 A | 16-09-2009 |
| | | | EP | 2033024 A2 | 11-03-2009 |
| | | | JP | 2009540362 A | 19-11-2009 |
| | | | KR | 20090042210 A | 29-04-2009 |
| | | | US | 2007279740 A1 | 06-12-2007 |
| | | | US | 2009323184 A1 | 31-12-2009 |
| | | | WO | 2007145811 A2 | 21-12-2007 |
| US 2008262125 | A1 | 23-10-2008 | NONE | | |
| US 6902805 | B2 | 07-06-2005 | NONE | | |
| US 6770340 | B2 | 03-08-2004 | NONE | | |
| US 5783120 | A | 21-07-1998 | AU | 1581497 A | 16-09-1997 |
| | | | BR | 9707768 A | 27-07-1999 |
| | | | CA | 2247284 A1 | 04-09-1997 |
| | | | CN | 1212761 A | 31-03-1999 |
| | | | DE | 69708268 D1 | 20-12-2001 |
| | | | DE | 69708268 T2 | 18-07-2002 |
| | | | EP | 0883819 A1 | 16-12-1998 |
| | | | JP | 4336839 B2 | 30-09-2009 |
| | | | JP | 2000506989 A | 06-06-2000 |
| | | | NO | 983929 A | 29-10-1998 |
| | | | US | 5783120 A | 21-07-1998 |
| | | | WO | 9732222 A1 | 04-09-1997 |
| US 5825543 | A | 20-10-1998 | AU | 714738 B2 | 13-01-2000 |
| | | | AU | 1976497 A | 16-09-1997 |
| | | | AU | 1980497 A | 16-09-1997 |
| | | | AU | 2209797 A | 16-09-1997 |
| | | | BR | 9707714 A | 06-04-1999 |
| | | | BR | 9707758 A | 27-07-1999 |
| | | | BR | 9707763 A | 27-07-1999 |
| | | | BR | 9707791 A | 27-07-1999 |
| | | | CA | 2246449 A1 | 04-09-1997 |
| | | | CA | 2246545 A1 | 04-09-1997 |
| | | | CA | 2248214 A1 | 04-09-1997 |
| | | | CA | 2248237 A1 | 04-09-1997 |
| | | | CN | 1212762 A | 31-03-1999 |
| | | | CN | 1212763 A | 31-03-1999 |
| | | | CN | 1212764 A | 31-03-1999 |
| | | | CN | 1217068 A | 19-05-1999 |
| | | | DE | 69709546 D1 | 14-02-2002 |
| | | | DE | 69709546 T2 | 05-09-2002 |
| | | | DE | 69722186 D1 | 26-06-2003 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.** EP 11 19 5159

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2012

| Patent document cited in search report | Publication date | Patent family member(s) | Publication date |
|---|---|---|---|
| | | DE 69722186 T2 | 19-02-2004 |
| | | DE 69722386 D1 | 03-07-2003 |
| | | DE 69722386 T2 | 01-04-2004 |
| | | EP 0883821 A1 | 16-12-1998 |
| | | EP 0883822 A1 | 16-12-1998 |
| | | EP 0883823 A1 | 16-12-1998 |
| | | EP 0883826 A1 | 16-12-1998 |
| | | JP 4336840 B2 | 30-09-2009 |
| | | JP 2000506990 A | 06-06-2000 |
| | | JP 2000506992 A | 06-06-2000 |
| | | JP 2000506993 A | 06-06-2000 |
| | | JP 2000506994 A | 06-06-2000 |
| | | US 5825543 A | 20-10-1998 |
| | | US 6057961 A | 02-05-2000 |
| | | US 6111696 A | 29-08-2000 |
| | | US 6297906 B1 | 02-10-2001 |
| | | WO 9732224 A1 | 04-09-1997 |
| | | WO 9732225 A1 | 04-09-1997 |
| | | WO 9732227 A1 | 04-09-1997 |
| | | WO 9732230 A1 | 04-09-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5783120 A
- US 5825543 A
- US 20060061862 A
- US 5833878 A
- US 6770340 B
- US 6902805 B

**Non-patent literature cited in the description**

- **A. APHONIN.** Optical Properties of Stretched Polymer Dispersed Liquid Crystal Films: Angle-Dependent Polarized Light Scattering. *Liquid Crystals,* 1995, vol. 19 (4), 469-480
- **Y. H. LIU ; D. A. ZUMBRUNEN.** *J. Mat. Sci.,* 1999, vol. 34, 1921
- **O. KWON ; D. A. ZUMBRUNEN.** *Polym. Eng. Sci.,* 2003, vol. 43, 1443